(19) **Europäisches Patentamt / European Patent Office / Office européen des brevets**

(11) **EP 4 752 979 A1**

(12) **EUROPEAN PATENT APPLICATION**
published in accordance with Art. 153(4) EPC

(43) Date of publication:
03.06.2026 Bulletin 2026/23

(21) Application number: 24849674.7

(22) Date of filing: 05.08.2024

(51) International Patent Classification (IPC):
$H01M\ 4/587^{(2010.01)}$    $H01M\ 4/36^{(2006.01)}$
$H01M\ 4/62^{(2006.01)}$    $H01M\ 4/133^{(2010.01)}$
$H01M\ 4/1393^{(2010.01)}$    $H01M\ 4/04^{(2006.01)}$
$H01M\ 10/052^{(2010.01)}$    $H01M\ 4/02^{(2006.01)}$

(52) Cooperative Patent Classification (CPC):
H01M 4/02; H01M 4/04; H01M 4/133;
H01M 4/1393; H01M 4/36; H01M 4/587;
H01M 4/62; H01M 10/052; Y02E 60/10

(86) International application number:
PCT/KR2024/011542

(87) International publication number:
WO 2025/029107 (06.02.2025 Gazette 2025/06)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 03.08.2023 KR 20230101867

(71) Applicant: **LG Energy Solution, Ltd.
Seoul 07335 (KR)**

(72) Inventors:
• **CHOI, Seung-Youn
Daejeon 34122 (KR)**

• **KANG, Hyeon-Jeong
Daejeon 34122 (KR)**
• **KIM, Hak-Yoon
Daejeon 34122 (KR)**
• **JEON, Kyung-Min
Daejeon 34122 (KR)**
• **PARK, Moon-Soo
Daejeon 34122 (KR)**

(74) Representative: **Goddar, Heinz J.
Boehmert & Boehmert
Anwaltspartnerschaft mbB
Pettenkoferstrasse 22
80336 München (DE)**

(54) **ANODE, MANUFACTURING METHOD THEREOF, AND ELECTROCHEMICAL DEVICE COMPRISING SAME**

(57) Disclosed are a negative electrode including a current collector and a negative electrode active material layer located on at least one surface of the current collector, wherein the negative electrode active material layer includes granules including a graphite-based active material of primary particles and a first binder, and at least one of a second conductive material or a second binder, a method for manufacturing the same, and an electrochemical device including the same.

FIG. 1

100

101
102

EP 4 752 979 A1

**Description**

TECHNICAL FIELD

The present disclosure relates to a negative electrode, a method for manufacturing the same and an electrochemical device including the same.

The present application claims priority to Korean Patent Application No. 10-2023-0101867 filed on August 3, 2023 in the Republic of Korea, the disclosure of which is incorporated herein by reference.

BACKGROUND

Due to the increasing use of fossil fuels, there is a growing demand for the use of alternative energy and clean energy, and in such circumstances, many studies are being made in the field of energy generation and storage using electrochemistry. Currently, a typical example of electrochemical devices using electrical and chemical energy is secondary batteries, and the range of application of secondary batteries is gradually expanding. The most common secondary batteries are lithium secondary batteries, and lithium secondary batteries are used as not only an energy source of mobile devices but also a power source of electric vehicles and hybrid electric vehicles as an alternative to vehicles using fossil fuels such as gasoline vehicles and diesel vehicles that are regarded as one of the main causes of air pollution, and they have a diverse range of applications including use as an auxiliary power source via a grid.

A lithium secondary battery has a structure in which an electrode assembly including a positive electrode and a negative electrode, each having an active material coating on an electrode current collector with a porous separator interposed between the positive electrode and the negative electrode is impregnated with an electrolyte including a lithium salt, and the electrode is manufactured by coating a slurry in which an active material, a binder and a conductive material are dispersed in a solvent on the current collector, drying and roll pressing.

Additionally, the basic performance characteristics of the lithium secondary battery, capacity, output and life are greatly affected by the negative electrode material. To maximize the performance of the battery, the negative electrode active material needs to fulfill the requirements that the electrochemical reaction potential is close to lithium metal, reaction reversibility with lithium ions is high and the diffusion rate of lithium ions in the active material is high.

The negative electrode of the lithium secondary battery primarily includes a mixture of artificial graphite and natural graphite as the negative electrode material to meet the performance requirements such as capacity, life characteristics, swelling, high temperature characteristics, process efficiency, cost and so on. In the case of primary particle artificial graphite or flaky natural graphite, due to high orientation of the electrode in the electrode rolling process, high swelling occurs in the electrode during charging and discharging and fast charging performance is poor. Thus, to use artificial graphite, granulation into secondary particles is carried out. In this instance, most of binders used for granulation of primary particle artificial graphite is pitch, and carbonized pitch exhibits the characteristics of soft carbon, causing particle chipping during rolling of the electrode, resulting in increased specific surface area, which affects high temperature performance of the battery.

SUMMARY

Technical Problem

The present disclosure is directed to providing a negative electrode with improved life characteristics and high temperature characteristics, a method for manufacturing the negative electrode, and an electrochemical device including the negative electrode.

Technical Solution

To solve the above-described problems, according to an aspect of the present disclosure, there is provided a negative electrode of the following embodiment.

According to a first embodiment,

there is provided the negative electrode including a current collector, and a negative electrode active material layer located on at least one surface of the current collector,
wherein the negative electrode active material layer includes granules including a graphite-based active material of primary particles and a first binder.

According to a second embodiment, in the first embodiment,

the graphite-based active material of primary particles may include natural graphite, artificial graphite, soft carbon, hard carbon, or two or more of them.

According to a third embodiment, in the first or second embodiment,

the graphite-based active material of primary particles may be platy, needle-like or spherical in shape or two or more of them.

According to a fourth embodiment, in any one of the first to third embodiments,

the negative electrode active material layer may include the granules including the graphite-based active material of primary particles, the first binder and a first conductive material.

According to a fifth embodiment, in any one of the first to fourth embodiments,

the negative electrode active material layer may include the granules including the graphite-based active material of primary particles and the first binder; and at least one of a second conductive material or a second binder.

According to a sixth embodiment, in any one of the first to fifth embodiments,

the negative electrode active material layer may include the granules including the graphite-based active material of primary particles, the first binder and a first conductive material; and at least one of a second conductive material or a second binder.

According to a seventh embodiment, in any one of the fourth to sixth embodiments,

each of the first conductive material and the second conductive material may independently include a point shaped conductive material, a linear shaped conductive material, a planar shaped conductive material, or two or more of them.

According to an eighth embodiment, in the seventh embodiment,

the point shaped conductive material may include carbon black, Denka black, acetylene black, Ketjen black, channel black, furnace black, lamp black, thermal black, or two or more of them, the linear shaped conductive material may include carbon nanotubes, carbon nanofibers, or both, and the planar shaped conductive material may include amorphous spherical graphite, graphene, or both.

According to a ninth embodiment, in any one of the first to eighth embodiments,

each of the first binder and the second binder may independently include a diene-based polymer, an acrylate-based polymer, a styrene-based polymer, a polyacrylonitrile-based polymer, a vinyl-based polymer, a polyoxide-based polymer, a polyacrylamide, a cellulose-based polymer, or two or more of them.

According to a tenth embodiment, in any one of the fourth to ninth embodiments,

in 100 parts by weight of the granules, an amount of the graphite-based active material of primary particles may range from 80 parts by weight to 99.95 parts by weight, an amount of the first conductive material may range from 0.01 parts by weight to 10 parts by weight, and an amount of the first binder may range from 0.1 parts by weight to 10 parts by weight.

According to an eleventh embodiment, in any one of the first to tenth embodiments,

an average particle size (D50) of the granules may range from 20 $\mu$m to 100 $\mu$m.

According to a twelfth embodiment, in any one of the first to eleventh embodiments,

a sphericity of the granules may be 0.75 or more.

According to a thirteenth embodiment, in any one of the first to twelfth embodiments,

the negative electrode active material layer may include 100 parts by weight of the granules, 0.01 parts by weight to 10 parts by weight of the second conductive material, and 0.1 parts by weight to 10 parts by weight of the second binder.

According to a fourteenth embodiment,

there is provided a method for manufacturing the negative electrode according to any one of the first to twelfth embodiments, including the steps of: drying a composition including the graphite-based active material of primary particles, the first binder and a first water-based dispersion medium by a spray drying method to manufacture the granules;

mixing the granules; at least one of a second conductive material or a second binder; and a second water-based dispersion medium to prepare a negative electrode slurry; and

coating the negative electrode slurry on the at least one surface of the current collector, drying and rolling to form the negative electrode active material layer.

According to a fifteenth embodiment,

there is provided a method for manufacturing the negative electrode according to any one of the first to twelfth embodiments, including the steps of: drying a composition including the graphite-based active material of primary particles, the first binder and a water-based dispersion medium by a spray drying method to manufacture the granules;

coating the granules on the at least one surface of the current collector; and

rolling the coated initial granules to form the negative electrode active material layer including the rolled granules.

According to a sixteenth embodiment,

there is provided an electrochemical device including the negative electrode according to any one of the first to thirteenth embodiments.

According to a seventeenth embodiment, in the sixteenth embodiment, the electrochemical device may be a secondary battery.

Advantageous Effects

According to an embodiment of the present disclosure, instead of graphite-based active materials of secondary particles in which graphite-based active materials of primary particles are connected with pitch, the negative electrode active material layer includes granules in which graphite-based active materials of primary particles are held together by the binder, thereby solving the high temperature characteristics degradation problem caused by particle chipping during rolling, improving the negative electrode surface characteristics after rolling, improving conductivity between the graphite-based active materials of primary particles, and improving life performance.

Additionally, it may be possible to design negative electrode materials for various purposes by granulation of two or more types of graphite-based active materials of primary particles, for example, artificial graphite or flaky graphite.

BRIEF DESCRIPTION OF THE DRAWING

The accompanying drawing illustrates an exemplary embodiment of the present disclosure and together with the foregoing description, serves to provide a better understanding of the technical aspect of the present disclosure, and thus, the present disclosure is not construed as being limited to the drawing.

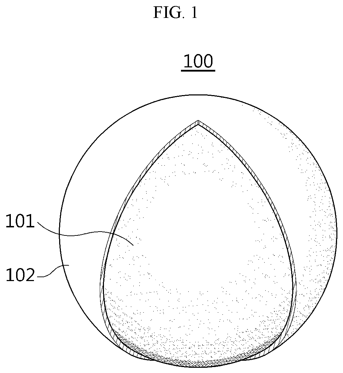

FIG. 1 is a diagram schematically showing a surface portion and a central portion of a granule included in an electrode according to an embodiment of the present disclosure.

DETAILED DESCRIPTION

Hereinafter, the present disclosure will be described in more detail to help an understanding of the present disclosure.

It should be understood that the terms or words used in the specification and the appended claims should not be construed as limited to general and dictionary meanings, but rather interpreted based on the meanings and concepts corresponding to the technical aspect of the present disclosure on the basis of the principle that the inventor is allowed to define the terms appropriately for the best explanation.

The terms used herein are used to describe exemplary embodiments, but not intended to be limiting of the present disclosure. Unless the context clearly indicates otherwise, the singular forms include the plural forms as well.

It should be further understood that 'comprise' or 'include' when used in the specification, specifies the presence of stated elements and does not preclude the presence or addition of one or more other elements unless expressly stated otherwise.

Additionally, the terms 'about' and 'substantially' are used herein in the sense of at, or nearly at, when given the manufacturing and material tolerances inherent in the stated circumstances and are used to prevent the unscrupulous infringer from unfairly taking advantage of the present disclosure where exact or absolute figures are stated as an aid to understanding the present disclosure.

In the specification, 'A and/or B' as used herein refers to either A or B or both.

The "glass transition temperature Tg" as used herein is measured by the method commonly used in the corresponding field, and for example, may be measured by differential scanning calorimetry (DSC).

The "porosity" as used herein refers to the ratio of pore volume in a structure to its total volume and is indicated in vol%, and may be used interchangeably with void fraction, degree of porosity or the like. In the present disclosure, the measurement of the porosity is not limited to a particular method, and according to an embodiment of the present disclosure, for example, the porosity may be measured by a Brunauer-Emmett-Teller (BET) measurement method using nitrogen gas, Hg porosimeter and ASTM D-2873. Alternatively, the net density of the separator may be calculated from the density (apparent density) of the separator, the composition ratio of the materials included in the separator and the density of each component, and the porosity of the separator may be calculated from a difference of apparent density and net density.

The "average particle size $D_{50}$" as used herein refers to a particle size at 50% of cumulative particle size distribution of particles, and the particle size may be measured using a laser diffraction method. Specifically, the particle size distribution is calculated by dispersing a target powder in a dispersion medium, feeding it into a commercially available laser diffraction particle size measurement device (for example, Microtrac S3500) and measuring a diffraction pattern difference according to the particle size when particles pass through a laser beam. The particle size $D_{50}$ may be measured by calculating the particle diameter at 50% of the cumulative particle size distribution of particles in the measurement device.

The "thickness" of each layer included in the electrode as used herein may indicate a value measured by the commonly used thickness measurement method. The thickness measurement method is not limited thereto, but the thickness may be, for example, a value measured using a thickness measurement device (Mitutoyo, VL-50S-B).

The "specific surface area" as used herein may indicate a value measured by the known method for measuring the specific surface area. The method for measuring the specific surface area is not limited thereto, but the specific surface area may be, for example, a value measured by a flowable or fixed method.

According to an aspect of the present disclosure,
there is provided a negative electrode including a current collector and a negative electrode active material layer located on at least one surface of the current collector, wherein the negative electrode active material layer includes granules including a graphite-based active material of primary particles and a first binder.

<Granule>

Hereinafter, the granule will be described in detail.

In the present disclosure, the granule includes the graphite-based active material of primary particles and the first binder. The granule may be a composite particle further including any other component, if necessary.

In an embodiment of the present disclosure, the granule may be a granulated form of two or more graphite-based active material primary particles held together by the first binder, not pitch. That is, as opposed to the conversion of graphite-based active material primary particles into secondary particles by pitch, the granule included in the negative electrode according to an embodiment of the present disclosure may be produced by granulation of graphite-based active material primary particles into secondary particles by spray drying, and may be referred to as a primary particle granule, a powder, a granulated particle or the like.

As a result, because the granule uses the first binder having high elasticity instead of the pitch-based additive that is prone to crumble to bind the graphite-based active materials of primary particles, it may be possible to solve the particle chipping problem of the graphite-based active material of secondary particles formed by the pitch-based additive, and provide the pressure dispersion effect on the pressure applied to the particles during rolling by the buffering action of the binder connecting the particles, thereby reducing or preventing the rolling limit characteristics. As a result, it may be possible to reduce or prevent swelling during charging and discharging, and suppress battery performance degradation caused by volume expansion. Here, the rolling limit refers to the rolling level applied to the electrode layer until the current collector breaks during the rolling process in the electrode manufacturing process.

Additionally, these advantageous characteristics of the negative electrode may improve the cycling characteristics of a secondary battery using the negative electrode, and the granule formed by agglomeration of the graphite-based active material of primary particles contributing to diversity of orientation may have fast charging performance like graphite-based active material of secondary particles.

The granule may have good chipping characteristics and cell performance as well as high process efficiency. For example, sphericity of main particles is important to a wet negative electrode manufacturing process through a slot die, and granulation of primary particles allows for higher sphericity than the conventional active material feeding method and it is advantageous for slot die coating.

FIG. 1 shows a surface portion and a central portion of the granule included in the negative electrode of an embodiment of the present disclosure. Referring to FIG. 1, in an embodiment of the present disclosure, the granule may have a larger amount of the first binder included in the surface portion 102 of the granule than the amount of the first binder included in the central portion 101 of the granule. The amount of the binder may refer to weight or volume.

Together with this or independently of this, the granule has a larger amount (wt%)($B_s/G_t$) of the first binder included in the surface portion 102 of the granule than the amount (wt%)($B_c/G_t$) of the first binder included in the central portion 101 of the granule based on the total weight 100 wt% of the granule. Here, $B_c$ denotes the weight of the binder included in the central portion, $B_s$ denotes the weight of the binder included in the surface portion, and $G_t$ denotes the total weight of the granule particle.

Together with this or independently of this, the granule has a larger amount (vol%)($B_s/G_t$) of the first binder included in the surface portion 102 of the granule than the amount (vol%)($B_c/G_t$) of the first binder included in the central portion 101 of the granule based on the total volume 100 vol% of the granule. Here, $B_c$ denotes the volume of the binder included in the central portion, $B_s$ denotes the volume of the binder included in the surface portion, and $G_t$ denotes the total volume of the granule particle.

Here, the surface portion may refer to an area near the granule surface to a predetermined depth in a direction from the granule surface toward the granule center. The central portion refers to an area other than the surface portion. In an embodiment of the present disclosure, the surface portion may refer to a surface area up to 30% of the radius, specifically inward from the surface of the granule, specifically toward the center of the granule. In an embodiment of the present disclosure, the surface portion may refer to a surface area from the surface of the granule up to 30%, 20%, 15%, 10% or 5% of the radius. Preferably, the surface portion may refer to a surface area from the surface of the granule up to 20% of the radius.

Meanwhile, in an embodiment of the present disclosure, the surface portion may refer to an area up to the granule surface after reaching 70% or more of the radius from the center of the granule in the outward direction of the granule. In an embodiment of the present disclosure, the surface portion may refer to, for example, an area up to the granule surface of 80% or more, 85% or more, 90% or more, or 95% or more of the radius.

In an embodiment of the present disclosure, the center of the granule may refer to a 1/2 point of the longest diameter of the granule. In the present disclosure, the radius may refer to a distance from the center of the granule to each point of the granule surface. In an embodiment of the present disclosure, the surface portion and the central portion may be divided on the basis of a point at the same distance from each surface of the granule along each radius, specifically a point at 30%, 20%, 10%, 5% or 1% of the radius from the surface.

In an embodiment of the present disclosure, in the area up to the granule surface after reaching 90% or more of the radius from the granule particle center, the amount of the first binder may be 50 wt% or more, 60 wt% or more, 70 wt% or more, 80 wt% or more, or 90 wt% or more based on the total weight 100 wt% of the granule in the corresponding area.

In another embodiment of the present disclosure, in the area up to the granule surface after reaching 95% or more of the particle radius from the granule center, the amount of the first binder may be 50 wt% or more, 60 wt% or more, 70 wt% or more, 80 wt% or more or 90 wt% or more based on the total weight 100 wt% of the granule in the corresponding area.

In another embodiment of the present disclosure, in the area up to the granule surface after reaching 99% or more of the radius from the granule particle center, the amount of the first binder may be 50 wt% or more, 60 wt% or more, 70 wt% or more, 80 wt% or more, or 90 wt% or more based on the total weight 100 wt% of the granule in the corresponding area.

In an embodiment of the present disclosure, in the area up to the granule surface after reaching 90% or more of the radius from the granule particle center, the amount of the first binder may be 50 vol% or more, 60 vol% or more, 70 vol% or more, 80 vol% or more, or 90 vol% or more based on the total volume 100 vol% of the granule in the corresponding area.

In another embodiment of the present disclosure, in the area up to the granule surface after reaching 95% or more of the particle radius from the granule center, the amount of the first binder may be 50 vol% or more, 60 vol% or more, 70 vol% or more, 80 vol% or more, or 90 vol% or more based on the total volume 100 vol% of the granule in corresponding area.

In another embodiment of the present disclosure, in the area up to the granule surface after reaching 99% or more of the radius from the granule particle center, the amount of the first binder may be 50 vol% or more, 60 vol% or more, 70 vol% or more, 80 vol% or more, or 90 vol% or more based on the total volume 100 vol% of the granule in corresponding area.

In an embodiment of the present disclosure, in the granule surface area up to 10% of the radius from the granule particle surface, the amount of the first binder may be 50 wt% or more, 60 wt% or more, 70 wt% or more, 80 wt% or more, or 90 wt% or more based on the total weight 100 wt% of the granule in corresponding area.

In another embodiment of the present disclosure, in the granule surface area up to 5% of the radius from the granule particle surface, the amount of the first binder may be 50 wt% or more, 60 wt% or more, 70 wt% or more, 80 wt% or more or 90 wt% or more based on the total weight 100 wt% of the granule in corresponding area.

In another embodiment of the present disclosure, in the granule surface area up to 1% of the radius from the granule particle surface, the amount of the first binder may be 50 wt% or more, 60 wt% or more, 70 wt% or more, 80 wt% or more, or 90 wt% or more based on the total weight 100 wt% of the granule in corresponding area.

In an embodiment of the present disclosure, in the granule surface area up to 10% of the radius from the granule particle surface, the amount of the first binder may be 50 vol% or more, 60 vol% or more, 70 vol % or more, 80 vol % or more, or 90 vol % or more based on the total volume 100 vol% of the granule in corresponding area.

In another embodiment of the present disclosure, in the granule surface area up to 5% of the radius from the granule particle surface, the amount of the first binder may be 50 vol% or more, 60 vol% or more, 70 vol% or more, 80 vol% or more or 90 vol% or more based on the total volume 100 vol % of the granule in corresponding area.

In another embodiment of the present disclosure, in the granule surface area up to 1% or more of the radius from the granule particle surface, the amount of the first binder may be 50 vol% or more, 60 vol% or more, 70 vol% or more, 80 vol% or more, or 90 vol% or more based on the total volume 100 vol% of the granule in corresponding area.

According to an embodiment of the present disclosure, it is confirmed that the granule has the surface portion area having high binder content from the surface to the predetermined depth in the direction toward the particle center, and the binder distribution in the other area than the surface portion, i.e., the central portion (a core portion) surrounded by the surface portion may be lower than the surface portion.

Describing the granule in more detail, the granule may have the central portion including the graphite-based active material of primary particles; and the surface portion located at all or part of the outer side of the central portion and including the first binder to bind the graphite-based active material of primary particles. That is, in the central portion of the granule, the graphite-based active material of primary particles may form an agglomerate by at least one of surface contact, line contact, point contact or two or more of these contacts, and in the surface portion of the granule, the first binder may be located at all or part of the outer side of the agglomerate, and hold and bind the graphite-based active materials of primary particles of the central portion of the granule.

According to an embodiment of the present disclosure, the central portion may further include a small amount of first binder to connect and hold the graphite-based active materials of primary particles of the central portion. However, as described above, the ratio of the amount of the first binder in the surface portion is preferably higher than that of the central portion.

Meanwhile, in an embodiment of the present disclosure, the granule may have an aspect ratio of from 0.5 to 1.0, and preferably from 0.75 to 1.0. The aspect ratio may refer to a ratio of the long axis length to the short axis length of the granule. In another embodiment of the present disclosure, an average aspect ratio of granules may have a value of from 0.5 to 1.0, preferably from 0.75 to 1.0, and in this case, the average aspect ratio may refer to a ratio of the average long axis length to the average short axis length of the granules. In this instance, the average short axis length may refer to the average value of length in the axial direction having the shortest length of the granule, and the average long axis length may refer to the average value of length in the axial direction having the longest length of the granule. When the aspect ratio of the granule lies in the aforementioned range, this may have a beneficial effect on sufficient flowability suitable for the process.

The graphite-based active material of primary particles may include natural graphite, artificial graphite, soft carbon, hard carbon, or two or more of them.

Here, the primary particle refers to an un-agglomerated particle. In contrast, the secondary particle refers to an agglomerate of two or more primary particles. The primary particle and the secondary particle may be distinguished using a scanning electron microscopic (SEM) image.

The graphite-based active material of primary particles may be platy, needle-like or spherical in shape, or two or more of them. In particular, when the graphite-based active material of primary particles has a flaky shape feature, it may be more advantageous for fast charging characteristics.

The first conductive material may include at least one of a point shaped conductive material, a linear shaped conductive material, or a planar shaped conductive material.

The point shaped conductive material refers to a material made up of individual microparticles having conductivity, and the particles may be dispersed and distributed in an electrical circuit to provide electrical conductivity, and may be mostly used in small amounts.

In the point shaped conductive material, the point shape may refer to a spherical particle shape or a hollow shape having the average diameter D50 ranging from 10 nm to 500 nm, or from 15 nm to 200 nm.

Additionally, the first conductive material may include any conductive material of the spherical particle shape having the above-described average diameter. Specific examples of the first conductive material may include carbon black, Denka black, acetylene black, Ketjen black, channel black, furnace black, lamp black, thermal black or two or more of them.

The linear shaped conductive material may be a material having a continuous and linear structure having electrical conductivity, and may exist primarily in the form of conductive fibers or nanotubes.

In the linear shaped conductive material, the linear shape may include a particle shape like needle, tuft or broken thread. For example, the linear shape may refer to a shape having an aspect ratio (a length-to-diameter ratio) ranging, for example, from 10 to 1,000, specifically from 20 to 500. For example, according to an embodiment of the present disclosure, the linear shaped conductive material may have the average diameter of from 5 nm to 500 nm, or from 5 nm to 300 nm. Additionally, the linear shaped conductive material used in an embodiment of the present disclosure may have the average length of from 3 $\mu$m to 50 $\mu$m, specifically from 5 $\mu$m to 30 $\mu$m, more specifically from 5 $\mu$m to 20 $\mu$m, more specifically from 10 $\mu$m to 20 $\mu$m, and more specifically from 13 $\mu$m to 17 $\mu$m.

Here, the average diameter is the arithmetic mean of diameter of the vertical plane in the length direction of the linear shaped conductive material, and for example, may be calculated from a scanning electron microscopic (SEM) image taken at 2,000 to 50,000x magnification by a field emission scanning electron microscope. Additionally, the average length is the arithmetic mean of length of the linear shaped conductive material, and may be calculated by the same method as the average diameter.

The linear shaped conductive material may include carbon nanotubes, carbon nanofibers, or both. The carbon nanotubes may include, for example, single-walled carbon nanotubes, double-walled carbon nanotubes and multi-walled carbon nanotubes.

The single-walled carbon nanotube refers to a carbon nanotube composed of six carbon atoms connected in a hexagonal shape to form a tube, in which the number of walls (graphite faces) is only one. The single-walled carbon nanotubes have the outstanding electrical properties due to the one-dimensional structure and exhibit diverse electrical properties according to the hexagonal honeycomb shaped molecular asymmetry (chirality) structure and diameter, and the multi-walled carbon nanotube refer to a carbon nanotube in which the number of walls is multiple.

The average diameter of the single-walled carbon nanotubes may range from 0.5 nm to 15 nm. According to an embodiment of the present disclosure, the average diameter of the single-walled carbon nanotubes may range from 1 nm to 10 nm, or from 1 nm to 5 nm, or from 1 nm to 2 nm. When the average diameter of the single-walled carbon nanotubes lies in the aforementioned range, even with a very small amount of single-walled carbon nanotubes, electrical conductivity of the negative electrode may be maintained. The BET specific surface area of the single-walled carbon nanotubes may range from 500 $m^2/g$ to 1,500 $m^2/g$, or from 900 $m^2/g$ to 1,200 $m^2/g$. When the BET specific surface area lies in the aforementioned range, a conductive material dispersion having preferred solid content may be produced. The BET specific surface area may be measured through a nitrogen absorption BET method. The aspect ratio of the single-walled carbon nanotubes may range from 50 to 20,000, or the length of the single-walled carbon nanotubes may range from 5 $\mu$m to 100 $\mu$m, or from 5 $\mu$m to 50 $\mu$m. The aspect ratio may be calculated by averaging the aspect ratios of 15 single-walled carbon nanotubes having high aspect ratios and 15 single-walled carbon nanotubes having low aspect ratios when observing the single-walled carbon nanotubes powder through SEM.

The single-walled carbon nanotubes are longer in length and larger in volume due to higher aspect ratio than multi-walled carbon nanotubes or double-walled carbon nanotubes, so it may be more advantageous because electrical networks may be formed by use of single-walled carbon nanotubes even in a small amount.

The linear shaped conductive material may play a role of a matrix surrounding the graphite-based active material of primary particles to suppress volume expansion of the graphite-based active material of primary particles and maintain the structure of the negative electrode active material layer including the graphite-based active material of primary particles during charging and discharging, thereby contributing to the long life, and may increase the movement distance of electrons so that the negative electrode active material located in the upper and lower parts of the negative electrode active material layer can participate in charging and discharging reaction, thereby improving high-rate charging and discharging performance.

The planar shaped conductive material may be a material having a planar structure having electrical conductivity, and form electrical conduction paths over a wide area. This material may provide high conductivity, and may be mostly used as a component of large scale electrodes or electronic devices. Examples of the planar shaped conductive material may include graphene, amorphous spherical graphite, or both.

Additionally, when the point shaped conductive material is used as the first conductive material included in the granule, the point shaped conductive material may have a large area of contact with the graphite-based active material of primary particles, thereby improving high-rate characteristics.

According to an embodiment of the present disclosure, when the point shaped conductive material and the linear shaped conductive material are used together as the first conductive material, or when the linear shaped conductive material is used as the first conductive material and the point shaped conductive material is used as a second conductive material as described below, the linear shaped conductive material and the point shaped conductive material may be uniformly distributed in the negative electrode active material layer, and the above-described beneficial effects of the linear shaped conductive material and the point shaped conductive material may be exerted at the same time, and in particular, electrical networks may be sufficiently formed in the negative electrode active material layer by the use in smaller amounts than the negative electrode using the linear shaped conductive material alone, thereby achieving high conductivity and expansion suppression performance of the graphite-based active material of primary particles.

In an embodiment of the present disclosure, the amount of the first conductive material may range from 0.1 parts by weight to 10 parts by weight, or from 0.25 parts by weight to 2 parts by weight based on 100 parts by weight of the graphite-based active material of primary particles.

When the amount of the conductive material lies in the aforementioned range, electrical networks of the negative electrode may be formed at the optimal level.

In an embodiment of the present disclosure, when the first conductive material includes the linear shaped conductive material and the point shaped conductive material, a weight ratio of the linear shaped conductive material to the point shaped conductive material may range from 1 : 1 to 1 : 20, or from 1 : 1 to 1 : 10.

According to an embodiment of the present disclosure, the first binder may include a diene-based polymer, an acrylate-based polymer, a styrene-based polymer, a polyacrylonitrile-based polymer, a vinyl-based polymer, a polyoxide-based polymer, a polyacrylamide, a cellulose-based polymer, or two or more of them.

Examples of the diene-based polymer may include polymer including a conjugated diene derived monomer unit such as butadiene, isoprene and its hydrogenated product. A ratio of the conjugated diene derived monomer unit in the diene-based polymer may be usually 40 wt% or more, preferably 50 wt% or more, and more preferably 60 wt% or more. Specifically, the diene-based polymer may include a conjugated diene homopolymer such as polybutadiene or polyisoprene; an aromatic vinyl-conjugated diene copolymer such as styrene-butadiene copolymer (SBR) with carboxyl modification; a vinyl cyanide-conjugated diene copolymer such as an acrylonitrile-butadiene copolymer (NBR); hydrogenate SBR, hydrogenated NBR.

Examples of the acrylate-based polymer may include polymer including a monomer unit derived from acrylic acid ester and/or methacrylic acid ester. A ratio of the monomer unit derived from acrylic acid ester and/or methacrylic acid ester in the acrylate-based polymer may be usually 40 wt% or more, preferably 50 wt% or more, and more preferably 60 wt% or more.

Specific examples of the acrylate-based polymer may include polyalkylmethacrylate, polyalkylacrylate or their copolymer, a copolymer of alkyl acrylate and oligoethylene glycol, a copolymer of alkylmethacrylate and oligoethylene glycol, a copolymer of alkylacrylate and dimethylamino ethylacrylate, a copolymer of alkylmethacrylate and dimethylamino ethylacrylate, a copolymer of alkylacrylate and hexafluoro butylmethacrylate, a copolymer of alkylmethacrylate and hexafluoro butylmethacrylate, or two or more of them. In the acrylate-based polymer, the alkyl group may include a methyl group, an ethyl group, a butyl group or a hexyl group.

Additionally, specific examples of the acrylate-based polymer may include a cross-linked acrylate-based polymer such as an acrylic acid 2-ethylhexyl-methacrylic acidacrylonitrile-ethyleneglycoldimethacrylate copolymer, an acrylic acid 2-ethylhexyl-methacrylic acid-methacrylonitrile-diethyleneglycoldimethacylate copolymer, an acrylic acid 2-ethylhexyl-styrene-methacrylic acid-ethyleneglycoldimethacylate copolymer, a butyl acrylate-acrylonitrile-diethyleneglycoldimethacylate copolymer and a butyl acrylate-acrylic acid-trimethylolpropanetrimethacrylate copolymer; a copolymer of ethylene and (meth)acrylic acid ester such as an ethylene-methyl acrylate copolymer, an ethylene-methyl methacrylate copolymer, an ethylene-ethyl acrylate copolymer and an ethylene-ethyl methacrylate copolymer; a graft polymer with a radically polymerizable monomer grafted onto the copolymer of ethylene and (meth)acrylic acid ester. Meanwhile, the radically polymerizable monomer used in the graft polymer may include, for example, methyl methacrylate, acrylonitrile, methacrylic acid. Besides, a copolymer of ethylene and (meth)acrylic acid such as an ethylene-acrylic acid copolymer, an ethylene-methacrylic acid copolymer may be used as a dispersion binder.

The styrene-based polymer may include polymer having a styrene monomer derived repeat unit, for example, a styrene homopolymer (polystyrene), a styrene copolymer. Examples of the styrene copolymer may include a block copolymer such as a styrene-butadiene copolymer (SBR), a styrene-ethylene-butadiene copolymer, a styrene-butadiene-propylene copolymer, a styrene-butadiene-acrylate copolymer (SBR-acrylate) (for example, a styrene-n-butyl acrylate-itaconic acid-methyl methacylate-acrylonitrile copolymer, a styrene-n-butyl acrylate-itaconic acid-methyl methacrylate-acrylonitrile copolymer, etc.), a styrene-isoprene copolymer, a styrene-butadiene block copolymer, a styrene-butadienestyrene·block copolymer, a styrene-ethylene-butylene-styrene·block copolymer, a styrene-isoprene·block copolymer, a styrene-ethylene-propylene-styrene·block copolymer.

The polyacrylonitrile-based polymer may include polyacrylonitrile, acrylamideacrylonitrile-acrylic acid terpolymer.

The vinyl-based polymer may include polyvinylalcohol, polyvinylpropylene, polyvinylacetate.

The polyoxide-based polymer may include polyethyleneoxide, polypropylene oxide.

The cellulose-based polymer may include carboxymethyl cellulose (CMC), carboxyethyl cellulose.

In this instance, the polyacrylate may include polyalkylmethacrylate, polyalkylacrylate or their copolymer, a copolymer of alkyl acrylate and oligoethylene glycol, a copolymer of alkylmethacrylate and oligoethylene glycol, a copolymer of alkylacrylate and dimethylamino ethylacrylate, a copolymer of alkylmethacrylate and dimethylamino ethylacrylate, a copolymer of alkylacrylate and hexafluoro butylmethacrylate, a copolymer of alkylmethacrylate and hexafluoro butylmethacrylate, or two or more of them. In the acrylate-based polymer, the alkyl group may include a methyl group, an ethyl group, a butyl group or a hexyl group.

In an embodiment of the present disclosure, the amount of the first binder may range from 0.5 parts by weight to 10 parts by weight, or from 1 part by weight to 5 parts by weight based on 100 parts by weight of the graphite-based active material of primary particles.

In an embodiment of the present disclosure, in 100 parts by weight of the granule, the amount of the graphite-based active material of primary particles may range from 80 parts by weight to 99.5 parts by weight, or from 89 parts by weight to 98 parts by weight, and the amount of the first binder may range from 0.1 parts by weight to 10 parts by weight, or from 0.2 parts by weight to 8 parts by weight.

In an embodiment of the present disclosure, when the granule further includes the first conductive material, in 100 parts by weight of the granule, the amount of the graphite-based active material of primary particles may range from 80 parts by weight to 99.5 parts by weight, or from 89 parts by weight to 98 parts by weight, the amount of the first conductive material may range from 0.01 parts by weight to 10 parts by weight, or 0.03 parts by weight to 8 parts by weight, and the amount of the first binder may range from 0.1 part by weight to 10 parts by weight, or from 0.2 parts by weight to 5 parts by weight.

When the amounts of the graphite-based active material of primary particles and the first binder in the granule or the amounts of the graphite-based active material of primary particles, the first conductive material and the first binder in the granule lie in the aforementioned range, it may be possible to improve energy density of the negative electrode.

The average particle size D50 of the granules may range from 20 µm to 100 µm, or from 30 µm to 80 µm. The average particle size D50 of the graphite-based active material of primary particles may range from 2 µm to 30 µm, or from 4 µm to 20 µm.

The average particle size of the granules may be adjusted through atomizer speed and drying rate in the spraying process. Additionally, the average particle size of the granules may be adjusted by adjusting the number of graphite-based active materials of primary particles.

When the average particle size of the granules and the graphite-based active materials of primary particles lies in the aforementioned range, it may be possible to obtain more uniform granules with high yield.

Additionally, as the average particle size of the active materials of the granules is smaller, flowability in the coating die is better, but when the number of active materials is equal to or smaller than a predetermined number in the manufacture of the granules, the sphericity of the granules may be decreased.

The sphericity of the granule may be 0.75 or more, or from 0.75 to 1, or from 0.8 to 1.

The 'sphericity' of the granule refers to a value obtained by observing an image of the granule using SEM, measuring a circumference of a sphere having the same area as the projection image of the observed granule and calculating a ratio, and may be measured by applying the average sphericity of 10,000 particles.

The sphericity formula of the granule is as follows.

Sphericity = the circumference of the sphere having the same area/the perimeter length of the projection image

Additionally, the sphericity may be measured using an analyzer, for example, FPIA3000 (Malvern).

When the sphericity of the granule lies in the aforementioned range, slot die coating performance may be improved, and phase stability of slurries may be further improved, and when a dry process as described below is used to manufacture the negative electrode, it may be possible to prevent faults in the sheeting process due to good flowability of the granule in the sheeting process, and greatly reduce the production cost of the negative electrode.

<Negative electrode active material layer>

The negative electrode of the present disclosure includes the current collector and the negative electrode active material layer located on at least one surface of the current collector, and the negative electrode active material layer includes granules including the graphite-based active material of primary particles and the first binder.

According to an embodiment of the present disclosure, the negative electrode active material layer may include the granules including the graphite-based active material of primary particles, and the first binder; and at least one of a second conductive material or a second binder.

Additionally, according to an embodiment of the present disclosure, the negative electrode active material layer may include the granules including the graphite-based active material of primary particles, the first conductive material, and the first binder; and at least one of the second conductive material or the second binder.

That is, the negative electrode active material layer may include the granules including the graphite-based active material of primary particles and the first binder, or the granules including the graphite-based active material of primary particles, the first conductive material, and the first binder, and may further include at least one of the second conductive material or the second binder. Accordingly, in addition to the granules, the negative electrode active material layer may further include either the second conductive material or the second binder, or both.

As described below, when the negative electrode according to an embodiment of the present disclosure is manufactured by a dry method including coating the granules on at least one surface of the current collector and carrying out post-processing such as rolling, the negative electrode includes the granules in the negative electrode active material layer, but may not further include at least one of the first conductive material or the first binder.

Alternatively, even by the dry method including coating the granules on at least one surface of the current collector and carrying out post-processing such as rolling, the negative electrode according to an embodiment of the present disclosure may further include at least one of the second conductive material or the second binder to further improve the bond strength between the granules and the conductivity of the negative electrode active material layer.

Additionally, according to an embodiment of the present disclosure, when the negative electrode is manufactured using the granules by a wet method, the negative electrode may further include either the second binder to bind the granules and tightly hold the granules on the current collector, or the second conductive material to further improve the conductive networks of the negative electrode active material layer, or both.

In an embodiment of the present disclosure, the negative electrode active material layer may have porosity of from 20 vol% to 40 vol%, and when the porosity lies in the aforementioned range, electrolyte wettability, shape stability and ionic conductivity may be further improved.

Meanwhile, according to an embodiment of the present disclosure, the thickness of the negative electrode active material layer may range, for example, from 30 $\mu$m to 300 $\mu$m, but is not limited thereto.

According to another embodiment of the present disclosure, the negative electrode active material layer may be a single layer including one unit active material layer.

According to an embodiment of the present disclosure, the negative electrode active material layer may have a multilayer structure including two or more unit active material layers stacked. In this instance, the electrode material included in each unit active material layer, for example, the negative electrode active material and the binder may be identical or different for each layer, and is not limited thereto.

According to an embodiment of the present disclosure, the second binder may include a diene-based polymer, an acrylate-based polymer, a styrene-based polymer, a polyacrylonitrile-based polymer, a vinyl-based polymer, a polyoxide-based polymer, a polyacrylamide, a cellulose-based polymer, or two or more of them. For specific examples of the second binder, reference may be made to the above-described specific examples of the first binder.

Additionally, the second conductive material may include at least one of a point shaped conductive material or a linear shaped conductive material. In this instance, for the point shaped conductive material and the linear shaped conductive material, reference may be made to the foregoing description of the first conductive material.

According to an embodiment of the present disclosure, the negative electrode active material layer may include 100 parts by weight of the granules, and 0.1 parts by weight to 10 parts by weight or 0.2 parts by weight to 8 parts by weight of the second binder.

According to an embodiment of the present disclosure, the negative electrode active material layer may include 100 parts by weight of the granules, and 0.01 parts by weight to 10 parts by weight or 0.2 parts by weight to 5 parts by weight of the second conductive material.

According to an embodiment of the present disclosure, the negative electrode active material layer may include 100 parts by weight of the granules, 0.01 parts by weight to 10 parts by weight or 0.2 parts by weight to 5 parts by weight of the second conductive material, and 0.1 parts by weight to 10 parts by weight or 0.2 parts by weight to 8 parts by weight of the second binder.

When the amounts of the granules, the second conductive material and the second binder in the negative electrode active material layer lie in the aforementioned range, it may be possible to provide the properly improved energy density.

Meanwhile, in some circumstances, the negative electrode active material layer may further include fillers to suppress the expansion of the negative electrode active material layer, and the fillers are not limited to a particular type and may include any fibrous material that does not cause any chemical change to the corresponding battery, and for example, may include olefin-based polymer such as polyethylene, polypropylene; fibrous materials such as glass fibers, carbon fibers.

The current collector is not limited to a particular type and may include any material that has high conductivity and does not cause any chemical change to the battery, for example, stainless steel, aluminum, nickel, titanium, sintered carbon, copper or aluminum or stainless steel treated with carbon, nickel, titanium or silver on the surface. Additionally, the current collector may have microtexture on the surface to increase the adhesion strength of the negative electrode active material, and may come in various type, for example, a film, a sheet, a foil, a net, a porous body, a foam, a nonwoven fabric or the like.

In an embodiment of the present disclosure, the current collector may have a primer layer on all or part of the current collector.

The primer layer may include a binder for the primer layer and a conductive material for the primer layer, and the sum of amounts of the binder and the conductive material in the primer layer may be 90 wt% or more.

The electrode according to an embodiment of the present disclosure includes the negative electrode active material layer including the granules, and in this instance, when the primer layer includes the binder and the conductive material such that the sum of amounts of the binder and the conductive material is 90 wt% or more, it may be possible to ensure time-dependent stability of the primer layer, thereby achieving good properties such as adhesion strength and life characteristics, but the present disclosure is not limited thereto.

According to an embodiment of the present disclosure, the primer layer includes the binder for the primer layer and the conductive material for the primer layer, and may further include a dispersant.

According to an embodiment of the present disclosure, the primer layer includes the binder for the primer layer and the conductive material for the primer layer, but may not substantially include the dispersant.

According to an embodiment of the present disclosure, the binder for the primer layer may include, without limitation, any type of binder commonly used in the primer layer.

According to another embodiment of the present disclosure, the binder for the primer layer may preferably include polymer for ensuring the time-dependent stability of the primer layer. Specifically, the binder for the primer layer may have the glass transition temperature Tg of 45°C or less.

According to another embodiment of the present disclosure, the binder for the primer layer may include, for example, styrene butadiene rubber (SBR), butadiene rubber (BR), nitrile butadiene rubber (NBR), styrene butadiene styrene block polymer (SBS), styrene ethylene butadiene block polymer (SEB), styrene-(styrene butadiene)-styrene block polymer, natural rubber (NR), isoprene rubber (IR), ethylene-propylene-diene terpolymer (EPDM), poly(ethylene-co-propylene-co-5-methylene-2-norbornene), polytetrafluoroethylene (PTFE), polyvinylidene fluoride, polyvinyl chloride, polyvinylidene fluoride-co-hexafluoropropylene, polyvinylidene fluoride-co-trichloroethylene, polymethylmethacrylate, polyethylhexylacrylate, polybutylacrylate, polyacrylonitrile, polyvinylpyrrolidone, polyvinylacetate, polyethylene, polypropylene, polyethylene-co-vinyl acetate, polyethylene oxide, polypropylene oxide, polyarylate, cyanoethylpullulan, cyanoethylpolyvinylalcohol or two or more of them. Specifically, the binder may include styrene butadiene rubber (SBR), nitrile butadiene rubber (NBR), polymethylmethacrylate, polyethylhexylacrylate, polybutylacrylate or two or more of them.

According to another embodiment of the present disclosure, the binder for the primer layer may include one selected from the above-described types having the above-described glass transition temperature value or a mixture of two or more of them.

According to another embodiment of the present disclosure, the binder for the primer layer may include styrene butadiene rubber (SBR) having the glass transition temperature Tg of from -40°C to 45°C, nitrile butadiene rubber (NBR) having the glass transition temperature Tg of from -40°C to 45°C or a mixture thereof.

According to an embodiment of the present disclosure, the conductive material for the primer layer may have the specific surface area of from 30 $m^2/g$ to 1,400 $m^2/g$, and a spherical shape. In this instance, the primary particle size of the conductive material having the spherical shape may range, for example, from 10 nm to 100 nm, specifically from 15 nm to 70 nm, but is not limited thereto.

According to another embodiment of the present disclosure, the conductive material for the primer layer may have a tubular (tube type) shape having the specific surface area of from 10 $m^2/g$ to 400 $m^2/g$. In this instance, in the conductive material having the tubular shape, the diameter of a cross section in a direction perpendicular to the length direction may range from 0.1 nm to 3 nm, and specifically from 0.3 nm to 1.5 nm, but is not limited thereto.

The conductive material for the primer layer is not limited to a particular type and may include any conductive material that does not cause any chemical change to the corresponding battery, and for example, may include graphite such as natural graphite or artificial graphite; carbon black-based carbon compounds such as carbon black, acetylene black, Ketjen black, channel black, furnace black, lamp black, thermal black; conductive fibers such as carbon fibers or metal fibers; fluorocarbon; metal granules such as aluminum or nickel granules; conductive whiskers such as zinc oxide, potassium titanate; conductive metal oxide such as titanium oxide; conductive materials such as polyphenylene derivatives, but specifically, to uniformly mix the conductive material and improve conductivity, the conductive material for the primer layer may include activated carbon, graphite, carbon black, carbon nanotubes or a mixture thereof, and more specifically, activated carbon.

According to an embodiment of the present disclosure, the primer layer may include the above-described composition and have the thickness of from 300 nm to 1.5 μm, specifically from 700 nm to 1.3 μm, but is not limited thereto.

<Method for manufacturing negative electrode>

According to an aspect of the present disclosure, there is provided a method for manufacturing the negative electrode according to an embodiment of the present disclosure, including the steps of: drying a composition including the graphite-based active material of primary particles, the first conductive material, the first binder, and a first water-based dispersion medium by a spray drying method to manufacture granules;

mixing the granules with a carbon-based active material, the second point shaped conductive material, the second binder and a second water-based dispersion medium to prepare a negative electrode slurry; and
coating the negative electrode slurry on at least one surface of the current collector, drying and rolling.

First, the composition including the graphite-based active material of primary particles, the first conductive material, the first binder and the first water-based dispersion medium is dried by the spray drying method to manufacture the granules.

The graphite-based active material of primary particles, the first conductive material, the first binder and optionally an additive are dispersed or dissolved in the dispersion medium (a solvent for the first binder) to obtain the composition in which the graphite-based active material of primary particles, the first conductive material, the first binder and/or the additive is dispersed or dissolved.

The dispersion medium used to obtain the composition is, the most suitably, water, but an organic solvent may be used. The organic solvent may include, for example, alkylalcohols such as methylalcohol, ethylalcohol, propylalcohol; alkylketones such as acetone, methylethylketone; ethers such as tetrahydrofuran, dioxane, diglyme; amides such as diethylformamide, dimethylacetoamide, N-methyl-2-pyrrolidone (hereinafter referred to as NMP), dimethylimidazolidinone; sulfur-based solvents such as dimethylsulfoxide, sulfolane, but alcohols are preferred. When the organic solvent having lower boiling point than water is used together, the speed of drying in fluidized bed granulation may be increased. Additionally, as the dispersion or dissolution of the negative electrode binder may change, the viscosity or flowability of the slurry may be adjusted according to the amount or type of the dispersion medium, thereby improving the production efficiency.

The dispersion medium used to prepare the composition may be included in such an amount that the solids concentration of the composition usually ranges from 1 wt% to 50 wt%, or from 5 wt% to 50 wt%, or from 10 wt% to 30 wt%.

The method or order of dispersing or dissolving the graphite-based active material of primary particles, the first conductive material and the first binder in the dispersion medium is not limited to a particular method or order, and may include, for example, a method that adds the graphite-based active material of primary particles, the first conductive material and the first binder to the dispersion medium and mixes them, a method that dissolves or disperses the first binder in the dispersion medium, and finally, adds the graphite-based active material of primary particles and the first conductive material and mixes them. The mixing means may include, for example, a ball mill, a sand mill, a bead mill, a pigment dispersion machine, a stone mill, an ultrasonic dispersion machine, a homogenizer and a planetary mixer. The mixing may be performed, for example, in the range of room temperature to 80°C for 10 minutes to a few hours.

Subsequently, the composition is spray dried. The spray drying method dries the slurry while spraying the slurry in hot air. The spraying method of equipment used in the spray drying method includes a rotary disc method and a pressure nozzle method. The rotary disc method is a method which feeds the composition into almost the center of the disc that rotates at high speed, urges the composition to the periphery of the disc by the centrifugal force of the disc, to create mist and dries it. The rotation rate of the disc relies on the size of the disc, but is usually from 5,000 rpm to 35,000 rpm, and preferably from 15,000 rpm to 30,000 rpm. Meanwhile, the pressure nozzle method is a method which sprays the composition through the thin nozzle together with air or a liquid such as a high pressure fluid to convert into mist and dries it.

In an embodiment of the present disclosure, the temperature of the hot air may be controlled to 80°C to 250°C on the basis of the reactor inlet temperature (input) to form the granule structure having the high amount of the first binder on the surface. In the present disclosure, when considering the gradient of the amount of the first binder and the aspect ratio, the temperature of the hot air may be preferably controlled to 175°C to 220°C, and more preferably 180°C to 220°C. In the spray drying method, the hot air suction method is not limited to a particular method, and may include, for example, a method of cocurrent flow of hot air and spray direction in the horizontal direction, a method of spraying from a drying tower top to cause it fall together with hot air, a method of countercurrent contact between sprayed droplets and hot air, a method of cocurrent flow of sprayed droplets and hot air, fall by gravity and countercurrent contact. Meanwhile, in an embodiment of the present disclosure, in the spray drying, the outlet temperature (the temperature of hot air released from the reactor) of the reactor may be controlled to 90°C to 130°C.

When the outlet temperature and/or a difference $\triangle T$ between inlet temperature and outlet temperature is low, drying is not properly performed, so particles containing a large amount of remaining solvent may be formed, thereby failing to form spherical particles of uniform shape, resulting in agglomeration of granules or amorphous granules. Meanwhile, when the inlet temperature is overly high and $\triangle T$ is large, granulation fails due to overdrying and particles having very small particle size D50 and low aspect ratio may be produced. Accordingly, to control the particle size to the proper level together with high aspect ratio and less binder agglomeration, it is necessary to control the inlet temperature and outlet temperature within the proper range.

Additionally, heating may be optionally performed to cure the surface of the result obtained by the spray drying, i.e., the granules, and in this instance, the thermal treatment temperature may be usually from 80°C to 300°C.

Subsequently, the granules may be mixed with the second conductive material, the second binder and the second water-based dispersion medium to prepare the negative electrode slurry.

In this instance, for the second water-based dispersion medium used, reference may be made to the first water-based dispersion medium described above, and for the slurry preparation process, reference may be made to the composition preparation process for manufacturing the granules described above.

Subsequently, the negative electrode slurry is coated on at least one surface of the current collector, dried and rolled to form the negative electrode active material layer.

The slurry prepared by the above-described method is coated on the current collector. In this instance, the current collector may have the primer layer including the conductive material for the primer layer and the binder for the primer layer as described above on all or part of at least one surface of the current collector.

In an embodiment of the present disclosure, the method for coating the slurry on at least one surface of the current collector may include any method commonly used in the corresponding technical field, and may include, for example, spray coating, dip coating, gravure coating.

In an embodiment of the present disclosure, the drying may be performed by any drying method commonly used to manufacture electrodes. For example, the drying may be performed at 30°C to 200°C or 40°C to 100°C. Additionally, the drying may be performed for 2 minutes to 20 minutes or 2 minutes to 10 minutes by air.

The rolling step generally uses a press process by rolls. In the roll press process, two cylindrical rolls are vertically arranged in parallel at a small interval, and the electrode is placed between the rolls and pressed by rotating the rolls in the opposite directions. The rolls may adjust the heating or cooling temperature.

According to an aspect of the present disclosure, there is provided a method for manufacturing the negative electrode according to an embodiment of the present disclosure, including the steps of: drying a composition including the graphite-based active material of primary particles, the first conductive material, the first binder, and a water-based dispersion medium by a spray drying method to manufacture granules;

coating the granules on at least one surface of the current collector; and

rolling the coated granules to form the negative electrode active material layer including the rolled granules.

For the step of manufacturing the granules in the method for manufacturing the negative electrode, the foregoing description of the method for manufacturing the negative electrode may be incorporated herein.

The manufactured granules are coated on at least one surface of the current collector. In this instance, the current collector may have the primer layer including the conductive material and the binder as described above on all or part of at least one surface of the current collector.

According to an embodiment of the present disclosure, the step of coating the granules on one surface of the current collector may be performed by a feeding equipment, for example, a screw feeder. Alternatively, the granules may be distributed on the negative current collector and evenly spread using a blade to adjust the thickness.

Subsequently, the coated granules may be rolled to form the negative electrode active material layer including the rolled granules.

According to an embodiment of the present disclosure, the active material layer may be formed by a roll-type press forming machine. In this instance, the negative electrode active material layer may be formed by rolling the coated granules with a press machine.

In these methods, the roll press forming temperature may usually range from 0°C to 200°C, and may be preferably higher than the melting point or the glass transition temperature of the negative electrode binder and more preferably, may be higher by at least 20°C. In the roll press forming, the forming speed may usually range from 0.1 m/min to 20 m/min, or from 1 m/min to 10 m/min. Additionally, the press nip pressure between rolls may usually range from 0.2 kN/cm to 30 kN/cm, or from 0.5 kN/cm to 10 kN/cm.

To reduce the thickness difference of the formed negative electrode and increase the density of the negative electrode active material layer, thereby contributing to high capacity, pressing may be additionally performed if necessary. The post-pressing method generally uses a press process by rolls. In the roll press process, two cylindrical rolls are vertically arranged in parallel at a small interval, and the electrode is placed between the rolls and pressed by rotating the rolls in the opposite directions. The rolls may adjust the heating or cooling temperature.

According to an embodiment of the present disclosure, the granules may be supplied to the at least one surface of the current collector and transferred to the rolls of the press forming machine at the same time, to directly form the active material layer on the current collector.

Additionally, according to an aspect of the present disclosure, there is provided an electrochemical device including the negative electrode according to an embodiment of the present disclosure.

The electrochemical device may include any device in which electrochemical reaction takes place, and specific examples may include any type of primary battery, secondary battery, fuel cell, solar cell or capacitor such as supercapacitor. In the present disclosure, preferably the electrochemical device may be a secondary battery, and more preferably a lithium ion secondary battery.

Additionally, according to an embodiment of the present disclosure, there may be provided an energy storage system including the secondary battery as a unit battery.

The secondary battery may include an electrode assembly including the negative electrode according to an embodiment of the present disclosure, a positive electrode and a separator and a battery case (a cylindrical case, a prismatic case, a pouch, etc.) accommodating the electrode assembly together with a lithium containing nonaqueous electrolyte.

The positive electrode may have a positive electrode active material layer including a positive electrode active material, a binder, and optionally a conductive material on at least one surface of a current collector.

The positive electrode active material may include any type of lithium transition metal oxide, lithium metal iron phosphate, or metal oxide without limitation, and may include, for example, layered compounds such as lithium cobalt oxide ($LiCoO_2$), lithium nickel oxide ($LiNiO_2$) or compounds with one or more transition metal substitution; lithium manganese oxide of formula $Li_{1+x}Mn_{2-x}O_4$ (x is 0 to 0.33), $LiMnO_3$, $LiMn_2O_3$, $LiMnO_2$; lithium copper oxide ($Li_2CuO_2$); vanadium oxide such as $LiV_3O_8$, $LiV_3O_4$, $V_2O_5$, $Cu_2V_2O_7$; Ni site lithium nickel oxide represented by formula $LiNi_{1-x}M_xO_2$ (M = Co, Mn, Al, Cu, Fe, Mg, B or Ga, x = 0.01 to 0.3); lithium manganese composite oxide represented by formula $LiMn_{2-x}M_xO_2$ (M = Co, Ni, Fe, Cr, Zn or Ta, x = 0.01 to 0.1) or $Li_2Mn_3MO_8$ (M = Fe, Co, Ni, Cu or Zn); $Li_{1+x}(Ni_aCo_bMn_cAl_d)_{1-x}O_2$ (x = 0 to 0.03, a = 0.3 to 0.95, b = 0.01 to 0.35, c = 0.01 to 0.5, d = 0.001 to 0.03, a+b+c+d=1) with partial substitution of aluminum ions for Li in the formula; lithium metal phosphate $LiMPO_4$ (M = Fe, Co, Ni, or Mn), disulfide compounds; $Fe_2(MoO_4)_3$, but is not limited thereto.

In an embodiment of the present disclosure, the binder included in the positive electrode may include any commonly used binder material for electrochemical devices without limitation, but may include, for example, a diene-based polymer, an acrylate-based polymer, a fluorine-based polymer, a styrene-based polymer or two or more of them.

Examples of the diene-based polymer may include polymer including a conjugated diene derived monomer unit such as butadiene, isoprene and its hydrogenated product. A ratio of the conjugated diene derived monomer unit in the diene-based polymer may be usually 40 wt% or more, preferably 50 wt% or more, and more preferably 60 wt% or more.

Specifically, the diene-based polymer may include a conjugated diene homopolymer such as polybutadiene or polyisoprene; an aromatic vinyl-conjugated diene copolymer such as styrene-butadiene copolymer (SBR) with carboxyl modification; a vinyl cyanide-conjugated diene copolymer such as an acrylonitrile-butadiene copolymer (NBR); hydrogenate SBR, hydrogenated NBR.

The styrene-based polymer may include polymer having a styrene monomer derived repeat unit, for example, a styrene homopolymer (polystyrene), a styrene copolymer. Examples of the styrene copolymer may include a block copolymer such as a styrene-ethylene-butadiene copolymer, a styrene-butadiene-propylene copolymer, a styrene-isoprene copolymer, a styrene-n-butyl acrylate-itaconic acid-methyl methacrylate-acrylonitrile copolymer, a styrene-n-butyl acrylate-itaconic acid-methyl methacrylate-acrylonitrile copolymer, a styrene-butadiene block copolymer, a styrene-butadienestyrene·block copolymer, a styrene-ethylene-butylene-styrene·block copolymer, a styrene-isoprene·block copolymer, a styrene-ethylene-propylene-styrene·block copolymer.

Examples of the acrylate-based polymer may include polymer including a monomer unit derived from acrylic acid ester and/or methacrylic acid ester. A ratio of the monomer unit derived from acrylic acid ester and/or methacrylic acid ester in the acrylate-based polymer may be usually 40 wt% or more, preferably 50 wt% or more, and more preferably 60 wt% or more. Specific examples of the acrylate-based polymer may include a cross-linked acrylate-based polymer such as an acrylic acid 2-ethylhexyl-methacrylic acidacrylonitrile-ethyleneglycoldimethacrylate copolymer, an acrylic acid 2-ethylhexyl-methacrylic acid-methacrylonitrile-diethyleneglycoldimethacylate copolymer, an acrylic acid 2-ethylhexyl-styrene-methacrylic acid-ethyleneglycoldimethacylate copolymer, a butyl acrylate-acrylonitrile-diethyleneglycoldimethacylate copolymer and a butyl acrylate-acrylic acid-trimethylolpropanetrimethacrylate copolymer; a copolymer of ethylene and (meth)acrylic acid ester such as an ethylene-methyl acrylate copolymer, an ethylene-methyl methacrylate copolymer, an ethylene-ethyl acrylate copolymer and an ethylene-ethyl methacrylate copolymer; a graft polymer with a radically polymerizable monomer grafted onto the copolymer of ethylene and (meth)acrylic acid ester. Meanwhile, the radically polymerizable monomer used in the graft polymer may include, for example, methyl methacrylate, acrylonitrile, methacrylic acid. Besides, a copolymer of ethylene and (meth)acrylic acid such as an ethylene-acrylic acid copolymer, an ethylene-methacrylic acid copolymer may be used as a dispersion binder.

The fluorine-based polymer may include a polyvinylidene fluoride-based copolymer such as polyvinylidene fluoride (PVdF), polytetrafluoroethylene (PTFE) and PVDF-HFP, specifically, polytetrafluoroethylene (PTFE), and more specifically, polytetrafluoroethylene (PTFE).

The separator may include porous polymer films commonly used as separators, for example, porous polymer films made of polyolefin-based polymer such as an ethylene homopolymer, a propylene homopolymer, an ethylene/butene copolymer, an ethylene/hexene copolymer and an ethylene/methacrylate copolymer, used singly or in stack. Additionally, an insulating thin film having high ion permeation and high mechanical strength may be used. The separator may include a safety reinforced separator (SRS) having a thin ceramic coating on the separator surface. Besides, commonly used porous nonwoven fabrics, for example, nonwoven fabrics made of high melting point glass fibers, polyethyleneterephthalate fibers may be used, but is not limited thereto.

The electrolyte solution includes a lithium salt as an electrolyte and an organic solvent to dissolve the electrolyte.

The lithium salt may include any lithium salt commonly used in electrolyte solutions for secondary batteries without limitation, and for example, an anion of the lithium salt may include at least one selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$.

The organic solvent included in the electrolyte solution may include any commonly used organic solvent without limitation, and typically, may include at least one selected from the group consisting of propylene carbonate, ethylene carbonate, diethylcarbonate, dimethylcarbonate, ethylmethylcarbonate, methylpropylcarbonate, dipropylcarbonate, dimethylsulfoxide, acetonitrile, dimethoxyethane, diethoxyethane, vinylenecarbonate, sulfolane, gamma-butyrolactone, propylenesulfite and tetrahydrofuran.

In particular, among these carbonate-based organic solvents, cyclic carbonate such as ethylenecarbonate and propylenecarbonate is a high viscosity organic solvent, and dissolves the lithium salt in the electrolyte well due to the high dielectric constant. More preferably, when a mixture of the cyclic carbonate with low viscosity, low dielectric constant linear carbonate such as dimethylcarbonate and diethylcarbonate at an optimal ratio is used, the electrolyte solution having high electrical conductivity may be prepared.

Optionally, the electrolyte solution stored according to the present disclosure may further include an additive such as an overcharge inhibitor included in commonly used electrolyte solutions.

The lithium secondary battery according to an embodiment of the present disclosure may be completed by placing the positive electrode and the negative electrode with the separator interposed between the positive electrode and the negative electrode to form the electrode assembly, placing the electrode assembly in, for example, the pouch, cylindrical battery case or prismatic battery case, and injecting the electrolyte. Alternatively, the lithium secondary battery may be completed by stacking the electrode assembly, filling with the electrolyte solution, placing the obtained resultant product in the battery case and sealing the battery case.

In this instance, the detailed structure of the secondary battery and the energy storage system is well known, and its description is omitted.

Hereinafter, examples will be described in detail to particularly describe the present disclosure. However, the examples according to the present disclosure may be modified in many other forms, and the scope of the present disclosure should not be interpreted as being limited to the following examples. The examples of the present disclosure are provided to explain the present disclosure to those skilled in the art thoroughly and completely.

EXAMPLE

[Example 1]

(1) Preparation of granule

Artificial graphite primary particles (average particle size D50: 11 $\mu$m, needle-like shape) as a graphite-based active material of primary particles, carbon black (SuperC65) as a first conductive material, and carboxymethyl cellulose (CMC) and styrene butadiene rubber (SBR) as a first binder were mixed with water as a dispersion medium at a weight ratio of 95.6:1:1.1:2.3 through a homogenizer to prepare a composition with viscosity of about 1000 cPs level. In this instance, the solid content in the composition was 30 wt%.

The prepared composition was fed into a spray dryer together with hot air in the pressure range condition of -40 mmH$_2$O to dry it. In this instance, the condition of the spray dryer was controlled to the inlet temperature of 180°C, the outlet temperature of 90°C, and the rotation rate of 18,000 rpm. Half of the drying result was sieved using an industrial sieve to remove large particles of 150 $\mu$m or more to finally prepare granules.

The granules had a central portion including the graphite-based active material of primary particles and the first conductive material and a surface portion located on the outer side of the central portion and including the first binder binding the graphite-based active material of primary particles and the first conductive material. The average particle size D50 of the obtained granules was 40 $\mu$m, and the aspect ratio was 0.96.

(2) Preparation of current collector having primer layer

30 parts by weight of carbon black (specific surface area: 30 m$^2$/g, particle size: 70 nm) as a conductive material for a primer layer, 69 parts by weight of styrene-butadiene rubber (SBR) (Tg: -15°C) as a binder for a primer layer and 1 part by weight of carboxymethyl cellulose (CMC) as a dispersant were mixed in water as a dispersion medium to prepare a slurry for a primer layer. In this instance, a ratio of amounts of the conductive material, the binder and the dispersant in the slurry for the primer layer was equal to a ratio of amounts of the conductive material, the binder, and the dispersant in the primer layer formed later. The percent of solids in the slurry for the primer layer was 7 wt%.

The prepared slurry for the primer layer was coated on one surface of a copper current collector (thickness: 10 $\mu$m), and dried at 130°C to form the primer layer on the front surface of the copper current collector.

(3) Manufacture of negative electrode

The obtained granules, carbon black (SuperC65) as a second conductive material, carboxymethyl cellulose (CMC) and styrene butadiene rubber (SBR) as a second binder were mixed with water as a dispersion medium at a weight ratio of 95.6:1:1.1:2.3 through a homogenizer to prepare a slurry with viscosity of about 1000 cPs level. In this instance, the solid content in the slurry was 30 wt%.

The prepared slurry was coated on both surfaces of the as-prepared current collector having the primer layer by comma coating, dried using a convection oven at 80°C for 0.5 hours and roll-pressed to manufacture a negative electrode having a negative electrode active material layer on both surfaces of the current collector with the loading level (weight basis) of 400 mg/25cm$^2$ per unit area.

(4) Manufacture of positive electrode

Li[Ni$_{0.88}$Co$_{0.07}$Mn$_{0.04}$]Al$_{0.01}$O$_2$ as a positive electrode active material, a pre-dispersion of carbon black as a positive electrode conductive material and polyvinylidene fluoride (PVdF) as a positive electrode binder were added to NMP as a dispersion medium at a weight ratio of 96.5:1.5:2 and stirred using a homogenizer at 3500 rpm for 1 hour to prepare a positive electrode active material slurry. The solid content in the pre-dispersion of carbon black was 16%, and the final solid content in the slurry was 68%. The slurry was coated on both surfaces of a 12 $\mu$m thick aluminum current collector, and the coated slurry was dried using a dryer equipped with a hot air blower and an IR heater to form a positive electrode active material layer.

Subsequently, the positive electrode active material layer was roll-pressed to manufacture a positive electrode having the positive electrode active material layer having the loading level of 590 mg/25cm$^2$ (weight basis) per unit area after drying.

(5) Manufacture of secondary battery

An electrode assembly was manufactured using the as-prepared positive and negative electrodes and a porous polyethylene membrane (thickness: 10 $\mu$m) as a separator interposed between them. The electrode assembly was placed in a coin-type battery case, followed by injection of a liquid electrolyte solution of 1M LiPF$_6$ in a solvent of ethylene carbonate, dimethylene carbonate and diethyl carbonate at a volume ratio of 1:2:1, then sealing and ageing to manufacture a coin cell secondary battery.

[Example 2]

(1) Preparation of granule

Granules were prepared by the same method as Example 1.

(2) Preparation of current collector having primer layer

A current collector having a primer layer was prepared by the same method as Example 1.

(3) Manufacture of negative electrode

The as-prepared granules were evenly coated on both surfaces of the current collector having the primer layer with the controlled loading level of 400 mg per 25cm$^2$ of the current collector by adjusting the thickness of the granules, and pressed by a sheeting machine which is a roll-to-roll hot roll forming machine in the speed condition of 2m per min at 60°C under 0.7 ton pressure per cm to form a negative electrode active material layer, to manufacture a negative electrode.

(4) Manufacture of positive electrode

A positive electrode was manufactured by the same method as Example 1.

(5) Manufacture of secondary battery

An electrode assembly was manufactured using the as-prepared positive and negative electrodes and a porous polyethylene membrane (thickness: 10 $\mu$m) as a separator interposed between them. The electrode assembly was placed in a coin-type battery case, followed by injection of a liquid electrolyte solution of 1M LiPF$_6$ in a solvent of ethylene carbonate, dimethylene carbonate and diethyl carbonate at a volume ratio of 1:2:1, then sealing and ageing to manufacture a coin cell secondary battery.

[Comparative Example 1]

Artificial graphite secondary particles (average particle size D50: 16.3 $\mu$m) as a graphite-based active material of secondary particles, carbon black (SuperC65) as a conductive material, and carboxymethyl cellulose (CMC) and styrene-butadiene rubber (SBR) as a binder were mixed with water as a dispersion medium at a weight ratio of 95.6:1:1.1:2.3 through a homogenizer to prepare a slurry with viscosity of about 1000 cPs level. In this instance, the solid content in the slurry was 30 wt%.

The prepared slurry was coated on both surfaces of the as-prepared current collector having the primer layer by comma coating, dried using a convection oven at 80°C for 0.5 hours and roll-pressed to manufacture a negative electrode having a negative electrode active material layer on both surfaces of the current collector with the loading level of 400 mg/25cm$^2$ (weight basis) per unit area.

A secondary battery were manufactured by the same method as Example 1 except that the negative electrode manufactured as described above were used.

[Comparative Example 2]

Artificial graphite secondary particles (average particle size D50: 16.3 $\mu$m) as a graphite-based active material of secondary particles, carbon black (SuperC65) as a conductive material, and carboxymethyl cellulose (CMC) and styrene-butadiene rubber (SBR) as a binder were mixed with water as a dispersion medium at a weight ratio of 95.6:1:1.1:2.3 through a homogenizer to prepare a slurry having viscosity of about 1000 cPs level. In this instance, the solid content in the slurry was 30 wt%.

The prepared composition was fed into a spray dryer together with hot air in the pressure range condition of -40 mmH$_2$O to dry it. In this instance, the condition of the spray dryer was controlled to the inlet temperature of 180°C, the outlet temperature of 90°C and the rotation rate of 18,000 rpm. Half of the drying result was sieved using an industrial sieve to remove large particles of 150 $\mu$m or more to finally prepare granules.

The granules had a central portion including the graphite-based active material of secondary particles and the first conductive material and a surface portion located on the outer side of the central portion and including the first binder binding the graphite-based active material of secondary particles and the first conductive material. The average particle size D50 of the obtained granules was 50 $\mu$m, and the aspect ratio was 0.96.

A negative electrode and a secondary battery were manufactured by the same method as Example 1 except that the granules obtained as described above were used.

[Comparative Example 3]

Artificial graphite secondary particles (average particle size D50: 16.3 $\mu$m) as a graphite-based active material of secondary particles, carbon black (SuperC65) as a conductive material and carboxymethyl cellulose (CMC) and styrene-butadiene rubber (SBR) as a binder were mixed with water as a dispersion medium at a weight ratio of 95.6:1:1.1:2.3 through a homogenizer to prepare a slurry with viscosity of about 1000 cPs level. In this instance, the solid content in the slurry was 30 wt%.

The prepared composition was fed into a spray dryer together with hot air in the pressure range condition of -40 mmH$_2$O to dry it. In this instance, the condition of the spray dryer was controlled to the inlet temperature of 180°C, the outlet temperature of 90°C and the rotation rate of 18,000 rpm. Half of the drying result was sieved using an industrial sieve to remove large particles of 150 $\mu$m or more to finally prepare granules.

The granule had a central portion including the graphite-based active material of secondary particles and the first conductive material and a surface portion located on the outer side of the central portion and including the first binder binding the graphite-based active material of secondary particles and the first conductive material. The average particle size D50 of the obtained granules was 50 $\mu$m, and the aspect ratio was 0.96.

A negative electrode and a secondary battery were manufactured by the same method as Example 2 except that the granules obtained as described above were used.

[Comparative Example 4]

Artificial graphite primary particles (average particle size D50: 11 $\mu$m, needle-like shape) as a graphite-based active material of primary particles, carbon black (SuperC65) as a conductive material, and carboxymethyl cellulose (CMC) and styrene-butadiene rubber (SBR) as a binder were mixed with water as a dispersion medium at a weight ratio of 95.6:1:1.1:2.3 through a homogenizer to prepare a slurry with viscosity of about 1000 cPs level. In this instance, the solid content in the slurry was 30 wt%.

A negative electrode having a negative electrode active material layer with the loading level of 400 mg/25cm$^2$ (weight basis) per unit area on both surfaces of the current collector was manufactured by the same method as Example 1 except that the as-prepared slurry was used.

[Evaluation results]

Cell life performance evaluation (room temperature)

The secondary batteries manufactured in Example 1, Example 2 and Comparative Examples 1 to 4 were charged in a CC/CV mode at 1C with the upper voltage limit of 4.20V at room temperature of 25°C and discharge resistance was calculated from voltage after applying the current corresponding to 2.5C at SOC 50 for 30 seconds. TABLE 1 summarizes the results below.

Cell life performance evaluation (high temperature)

Each of the secondary batteries manufactured in Example 1, Example 2 and Comparative Examples 1 to 3 was charged with 0.33C constant current and constant voltage at 45°C to 4.2V with 0.5% cut-off. Subsequently, each secondary battery was discharged with 0.33C constant current to 2.5V. This charge and discharge behavior is counted as one cycle, and charging and discharging was repeated performed 100 cycles. In this instance, capacity retention was calculated by the following equation.

Capacity retention = [(capacity in 100th cycle)/(capacity in 1st cycle (initial capacity))] X 100

TABLE 1 summarizes the evaluation results below.

QC characteristics (Plating SOC)

Each of the secondary batteries manufactured in Example 1, Example 2 and Comparative Examples 1 to 3 was charged and discharged at 0.2C in one cycle down to SOC0, and then charged at 1.0C to plot the charge. Subsequently, after reading SOC of the third point at which the gradient changes from negative to positive in a second order differential curve of the charging plot, this SOC was analyzed as a lithium ion plating site of the negative electrode and determined and evaluated as the maximum SOC to which the battery can be charged at the corresponding C-rate.

Comparison of high temperature storage characteristics

Each of the secondary batteries manufactured in Example 1, Example 2, and Comparative Examples 1 to 3 was charged in 0.33C, 4.2V, 1C/20-cut CC/CV conditions, and discharged in 0.33C CC condition to 2.5V. Subsequently, initial discharge resistance was measured through 2.5C, 30 sec discharge resistance (DCIR) at SOC 50%.
Subsequently, each secondary battery was fully charged in 0.33C, 4.2V, 1C/20-cut CC/CV condition and stored at 60°C for 4 weeks, and after the high temperature storage, resistance was measured. TABLE 1 summaries the measurements below.

[TABLE 1]

| | Room temperature resistance SOC50 (2.5C discharge 30 sec) (ohm) | High temperature 100 cycle capacity retention (45°C 0.33C-0.33C 100 cycles) | QC characteristics Plating SOC (measured with 1C) | High temperature storage characteristics (resistance after storage at 60°C, SOC100 for 4 weeks) (ohm) |
|---|---|---|---|---|
| Example 1 | 1.41 | 94.0% | 37 | 2.59 |
| Example 2 | 1.36 | 93.8 | 41 | 2.75 |
| Comparative Example 1 | 1.45 | 92.9 | 31 | 3.17 |
| Comparative Example 2 | 1.58 | 93.3 | 24 | 3.00 |
| Comparative Example 3 | 1.39 | 93.0 | 34 | 2.88 |
| Comparative Example 4 | 2.40 | - | - | - |

Referring to the above TABLE 1, it can be seen that when compared with the secondary batteries of Comparative Examples 1 to 4 including the negative electrode using the graphite-based active material of secondary particles, the secondary batteries of Example 1 and Example 2 including the negative electrode using the granules including the graphite-based active material of primary particles exhibit remarkable effects in terms of room temperature resistance characteristics, high temperature 100 cycle capacity retention, QC characteristics, and high temperature storage characteristics.

**Claims**

**1.** A negative electrode comprising:

a current collector, and a negative electrode active material layer located on at least one surface of the current collector,

wherein the negative electrode active material layer includes granules including a graphite-based active material of primary particles and a first binder.

2. The negative electrode according to claim 1,
wherein the graphite-based active material of primary particles includes natural graphite, artificial graphite, soft carbon, hard carbon, or two or more of them.

3. The negative electrode according to claim 1,
wherein the graphite-based active material of primary particles is platy, needle-like or spherical in shape or two or more of them.

4. The negative electrode according to claim 1,
wherein the negative electrode active material layer includes the granules including the graphite-based active material of primary particles, the first binder and a first conductive material.

5. The negative electrode according to claim 1,
wherein the negative electrode active material layer includes the granules including the graphite-based active material of primary particles and the first binder; and at least one of a second conductive material or a second binder.

6. The negative electrode according to claim 1,
wherein the negative electrode active material layer includes the granules including the graphite-based active material of primary particles, the first binder and a first conductive material; and at least one of a second conductive material or a second binder.

7. The negative electrode according to claim 6,
wherein each of the first conductive material and the second conductive material independently includes a point shaped conductive material, a linear shaped conductive material, a planar shaped conductive material, or two or more of them.

8. The negative electrode according to claim 7,
wherein the point shaped conductive material includes carbon black, Denka black, acetylene black, Ketjen black, channel black, furnace black, lamp black, thermal black, or two or more of them, the linear shaped conductive material includes carbon nanotubes, carbon nanofibers, or both, and the planar shaped conductive material includes amorphous spherical graphite, graphene, or both.

9. The negative electrode according to claim 5,
wherein each of the first binder and the second binder independently includes a diene-based polymer, an acrylate-based polymer, a styrene-based polymer, a polyacrylonitrile-based polymer, a vinyl-based polymer, a polyoxide-based polymer, a polyacrylamide, a cellulose-based polymer, or two or more of them.

10. The negative electrode according to claim 4,
wherein in 100 parts by weight of the granules, an amount of the graphite-based active material of primary particles ranges from 80 parts by weight to 99.95 parts by weight, an amount of the first conductive material ranges from 0.01 parts by weight to 10 parts by weight, and an amount of the first binder ranges from 0.1 parts by weight to 10 parts by weight.

11. The negative electrode according to claim 1,
wherein an average particle size (D50) of the granules ranges from 20 $\mu$m to 100 $\mu$m.

12. The negative electrode according to claim 1,
wherein a sphericity of the granules is 0.75 or more.

13. The negative electrode according to claim 5,
wherein the negative electrode active material layer includes 100 parts by weight of the granules, 0.01 parts by weight to 10 parts by weight of the second conductive material, and 0.1 parts by weight to 10 parts by weight of the second binder.

**14.** A method for manufacturing the negative electrode according to claim 1, the method comprising the steps of:

drying a composition including the graphite-based active material of primary particles, the first binder and a first water-based dispersion medium by a spray drying method to manufacture the granules;
mixing the granules; at least one of a second conductive material or a second binder; and a second water-based dispersion medium to prepare a negative electrode slurry; and
coating the negative electrode slurry on the at least one surface of the current collector, drying and rolling to form the negative electrode active material layer.

**15.** A method for manufacturing the negative electrode according to claim 1, the method comprising the steps of:

drying a composition including the graphite-based active material of primary particles, the first binder and a water-based dispersion medium by a spray drying method to manufacture the granules;
coating the granules on the at least one surface of the current collector; and
rolling the coated initial granules to form the negative electrode active material layer including the rolled granules.

**16.** An electrochemical device comprising the negative electrode according to any one of claims 1 to 13.

**17.** The electrochemical device according to claim 16,
wherein the electrochemical device is a secondary battery.

FIG. 1

<u>100</u>

# EP 4 752 979 A1

<table>
<tr><td><b>INTERNATIONAL SEARCH REPORT</b></td><td>International application No.<br><b>PCT/KR2024/011542</b></td></tr>
</table>

**A.    CLASSIFICATION OF SUBJECT MATTER**

**H01M 4/587**(2010.01)i; **H01M 4/36**(2006.01)i; **H01M 4/62**(2006.01)i; **H01M 4/133**(2010.01)i; **H01M 4/1393**(2010.01)i; **H01M 4/04**(2006.01)i; **H01M 10/052**(2010.01)i; **H01M 4/02**(2006.01)i

According to International Patent Classification (IPC) or to both national classification and IPC

**B.    FIELDS SEARCHED**

Minimum documentation searched (classification system followed by classification symbols)

H01M 4/587(2010.01); C01B 31/04(2006.01); H01M 10/052(2010.01); H01M 4/131(2010.01); H01M 4/133(2010.01); H01M 4/134(2010.01); H01M 4/36(2006.01); H01M 4/48(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 음극 (anode), 그래뉼 (granule), 바인더 (binder), 수계 분산매 (aqueous dispersion medium), 음극 활물질 (anodic material), 도전재 (conductive material)

**C.    DOCUMENTS CONSIDERED TO BE RELEVANT**

| Category* | Citation of document, with indication, where appropriate, of the relevant passages | Relevant to claim No. |
|---|---|---|
| X | JP 2012-134068 A (HITACHI CHEM CO., LTD.) 12 July 2012 (2012-07-12)<br>See abstract; paragraphs [0012], [0014], [0022], [0023], [0026], [0028]-[0030], [0034], [0039]-[0043], [0046] and [0060]; and claims 1-5. | 1-4,10-12,15-17 |
| A | | 5-9,13,14 |
| A | KR 10-2018-0113376 A (LG CHEM, LTD.) 16 October 2018 (2018-10-16)<br>See abstract; paragraph [0099]; and claims 1 and 10. | 1-17 |
| A | US 2021-0104729 A1 (NATIONAL TAIWAN UNIVERSITY OF SCIENCE AND TECHNOLOGY) 08 April 2021 (2021-04-08)<br>See abstract; and claims 1-19. | 1-17 |
| A | KR 10-2022-0075740 A (POSCO et al.) 08 June 2022 (2022-06-08)<br>See abstract; and claims 1 and 7-15. | 1-17 |

☑ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **19 November 2024** | **20 November 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2024/011542** |

### C.    DOCUMENTS CONSIDERED TO BE RELEVANT

| Category* | Citation of document, with indication, where appropriate, of the relevant passages | Relevant to claim No. |
| --- | --- | --- |
| A | KR 10-2023-0085257 A (OCI COMPANY LTD.) 14 June 2023 (2023-06-14)<br>See abstract; and claims 1-17. | 1-17 |

Form PCT/ISA/210 (second sheet) (July 2022)

**INTERNATIONAL SEARCH REPORT**
Information on patent family members

International application No.

**PCT/KR2024/011542**

| Patent document cited in search report | | | Publication date (day/month/year) | Patent family member(s) | | | Publication date (day/month/year) |
|---|---|---|---|---|---|---|---|
| JP | 2012-134068 | A | 12 July 2012 | JP | 5699592 | B2 | 15 April 2015 |
| KR | 10-2018-0113376 | A | 16 October 2018 | CN | 110506350 | A | 26 November 2019 |
| | | | | CN | 110506350 | B | 21 February 2023 |
| | | | | EP | 3557663 | A1 | 23 October 2019 |
| | | | | EP | 3557663 | B1 | 01 March 2023 |
| | | | | KR | 10-2248864 | B1 | 06 May 2021 |
| | | | | US | 11735713 | B2 | 22 August 2023 |
| | | | | US | 2019-0372095 | A1 | 05 December 2019 |
| | | | | US | 2023-0352652 | A1 | 02 November 2023 |
| | | | | WO | 2018-186559 | A1 | 11 October 2018 |
| US | 2021-0104729 | A1 | 08 April 2021 | US | 11322733 | B2 | 03 May 2022 |
| KR | 10-2022-0075740 | A | 08 June 2022 | KR | 10-2634600 | B1 | 06 February 2024 |
| KR | 10-2023-0085257 | A | 14 June 2023 | CN | 118284995 | A | 02 July 2024 |
| | | | | EP | 4447152 | A1 | 16 October 2024 |
| | | | | JP | 2024-527128 | A | 19 July 2024 |
| | | | | TW | 202324815 | A | 16 June 2023 |
| | | | | WO | 2023-106734 | A1 | 15 June 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230101867